# EUROPEAN PATENT APPLICATION

(11) **EP 4 810 987 A1**
(43) Date of publication of application: **23.09.2026**
(21) Application number: 26164896.8
(22) Date of filing: 16.03.2026
(51) Int. Cl.: G01S 7/48, G01S 17/42, G01S 17/86, G01S 17/89, G01S 7/487

(54) **ACQUISITION-TIME REMOVAL OF NOISE FROM POINT CLOUDS CAPTURED WITH 3D SCANNER**

(30) Priority: 21.03.2025 US 202519086639
(71) Applicant: Trimble Inc, Westminster CO 80021 (US)
(72) Inventor: SHANMUGAVEL, Vishakaraj, Westminster, 80021 (US); BANFIELD, Robert, Westminster, 80021 (US); TORTTILA, Karoliina, Westminster, 80021 (US)
(74) Representative: AWA Sweden AB

(57) **Abstract**

Techniques are described for generating point clouds of a site. A laser scanner of an onsite device captures scan data of the site. A GNSS receiver of the onsite device captures GNSS position data. A georeferenced point cloud including a plurality of points is generated using the scan data and the GNSS position data. The georeferenced point cloud is segmented using a trained machine learning model by assigning the plurality of points to a set of classes including a noise class and one or more non-noise classes to produce a segmented point cloud. A portion of the segmented point cloud assigned to the one or more non-noise classes is wirelessly transmitted to an offsite device that is remote from the site. The portion of the segmented point cloud is stored at the offsite device in an accumulated point cloud for subsequent processing at the offsite device.

## Description

### BACKGROUND

A georeferenced point cloud is a set of three-dimensional (3D) data points in space that are precisely located in a specific coordinate system used to represent real-world positions. Georeferenced point clouds produced by 3D scanners at work sites can be useful in various industries such as construction, engineering, and urban planning. Engineers can visualize the exact conditions of a site in 3D, improving the accuracy of any initial design or plan for the site. As the site is developed in accordance with the design, engineers can monitor the project's progress, reducing the likelihood of costly revisions later. 3D scanning can speed up the data collection process, capturing millions of data points in minutes. This efficiency reduces time on site and speeds up the overall project timeline.

### SUMMARY

A summary of the inventions are given below in reference to a series of examples. As used below, any reference to a series of examples is to be understood as a reference to each of those examples disjunctively (e.g., "Examples 1-4" is to be understood as "Examples 1, 2, 3, or 4").

Example 1 is a method of generating point clouds of a site, the method comprising: capturing scan data of the site using a laser scanner of an onsite device; capturing global navigation satellite systems (GNSS) data using a GNSS receiver of the onsite device; generating a georeferenced point cloud using the scan data and the GNSS position data, the georeferenced point cloud including a plurality of points; segmenting, using a trained machine learning model, the georeferenced point cloud by assigning the plurality of points to a set of classes including a noise class and one or more non-noise classes to produce a segmented point cloud; wirelessly transmitting a portion of the segmented point cloud assigned to the one or more non-noise classes to an offsite device that is remote from the site; and storing, at the offsite device, the portion of the segmented point cloud in an accumulated point cloud for subsequent processing at the offsite device.

Example 2 is the method of example(s) 1, further comprising: capturing second scan data of the site using the laser scanner; capturing second GNSS position data using the GNSS receiver; generating a second georeferenced point cloud using the second scan data and the second GNSS position data; segmenting, using the trained machine learning model, the second georeferenced point cloud to produce a second segmented point cloud; wirelessly transmitting a portion of the second segmented point cloud assigned to the one or more non-noise classes to the offsite device; and storing the portion of the second segmented point cloud in the accumulated point cloud for the subsequent processing.

Example 3 is the method of example(s) 2, further comprising: after storing the portion of the segmented point cloud and the portion of the second segmented point cloud, processing the accumulated point cloud at the offsite device by: clustering the accumulated point cloud into a set of clusters to form a clustered point cloud; fitting a containing volume to each of the set of clusters to produce a set of containing volumes; and identifying an object from an objects database that corresponds to each of the set of containing volumes to produce object data.

Example 4 is the method of example(s) 1, wherein the portion of the segmented point cloud stored in the accumulated point cloud comprises less than 10% of the accumulated point cloud when the subsequent processing is performed.

Example 5 is the method of example(s) 1, wherein capturing the GNSS position data using the GNSS receiver includes receiving satellite signals from a plurality of GNSS satellites at an antenna of the GNSS receiver.

Example 6 is the method of example(s) 1, wherein the trained machine learning model is a convolutional neural network or a transformer.

Example 7 is the method of example(s) 1, wherein the trained machine learning model is at least partially trained using a synthetic point cloud.

Example 8 is the method of example(s) 1, wherein the one or more non-noise classes include a building class, a tree class, or a ground class.

Example 9 is the method of example(s) 1, wherein the laser scanner is a LIDAR sensor.

Example 10 is the method of example(s) 1, wherein a second portion of the segmented point cloud assigned to the noise class is deleted at the onsite device.

Example 11 is an apparatus for generating point clouds of a site, the apparatus comprising: a laser scanner configured to capture scan data of the site; a global navigation satellite systems (GNSS) receiver configured to capture GNSS position data; and a data processor configured to: receive the scan data and the GNSS position data; generate a georeferenced point cloud using the scan data and the GNSS position data, the georeferenced point cloud including a plurality of points; segment, using a trained machine learning model, the georeferenced point cloud by assigning the plurality of points to a set of classes including a noise class and one or more non-noise classes to produce a segmented point cloud; and wirelessly transmit a portion of the segmented point cloud assigned to the one or more non-noise classes to an offsite device that is remote from the site, wherein the portion of the segmented point cloud is stored at the offsite device in an accumulated point cloud for the subsequent processing at the offsite device.

Example 12 is the apparatus of example(s) 11, wherein the data processor is further configured to: receive second scan data and second GNSS position data; generate a second georeferenced point cloud using the second scan data and the second GNSS position data; segment, using the trained machine learning model, the second georeferenced point cloud to produce a second segmented point cloud; and wirelessly transmit a portion of the second segmented point cloud assigned to the one or more non-noise classes to the offsite device, wherein the portion of the second segmented point cloud is stored at the offsite device in the accumulated point cloud for the subsequent processing.

Example 13 is the apparatus of example(s) 12, wherein the portion of the segmented point cloud stored in the accumulated point cloud comprises less than 10% of the accumulated point cloud when the subsequent processing is performed.

Example 14 is the apparatus of example(s) 11, wherein capturing the GNSS position data using the GNSS receiver includes receiving satellite signals from a plurality of GNSS satellites at an antenna of the GNSS receiver.

Example 15 is the apparatus of example(s) 11, wherein the trained machine learning model is a convolutional neural network or a transformer.

Example 16 is the apparatus of example(s) 11, wherein the trained machine learning model is at least partially trained using a synthetic point cloud.

Example 17 is the apparatus of example(s) 11, wherein the one or more non-noise classes include a building class, a tree class, or a ground class.

Example 18 is the apparatus of example(s) 11, wherein the laser scanner is a LIDAR sensor.

Example 19 is the apparatus of example(s) 11, wherein a second portion of the segmented point cloud assigned to the noise class is deleted at the apparatus.

Example 20 is a non-transitory computer-readable medium comprising instructions that, when executed by one or more processors, cause the one or more processors to perform operations for generating point clouds of a site, the operations comprising: receiving scan data captured by a laser scanner of an onsite device; receiving global navigation satellite systems (GNSS) data captured by a GNSS receiver of the onsite device; generating a georeferenced point cloud using the scan data and the GNSS position data, the georeferenced point cloud including a plurality of points; segmenting, using a trained machine learning model, the georeferenced point cloud by assigning the plurality of points to a set of classes including a noise class and one or more non-noise classes to produce a segmented point cloud; and wirelessly transmitting a portion of the segmented point cloud assigned to the one or more non-noise classes to an offsite device that is remote from the site, wherein the portion of the segmented point cloud is stored at the offsite device in an accumulated point cloud for the subsequent processing at the offsite device.

Example 21 is a method of identifying objects from a generated point cloud, the method comprising: capturing scan data of a site using a laser scanner of an onsite device; capturing global navigation satellite systems (GNSS) data using a GNSS receiver of the onsite device; generating a point cloud using the scan data and the GNSS position data, the point cloud including a plurality of points; clustering the point cloud into a set of clusters to form a clustered point cloud; fitting a containing volume to each of the set of clusters to produce a set of containing volumes; and identifying an object from an objects database that corresponds to each of the set of containing volumes to produce object data.

Example 22 is the method of example(s) 21, wherein capturing the GNSS position data using the GNSS receiver includes receiving satellite signals from a plurality of GNSS satellites at an antenna of the GNSS receiver.

Example 23 is the method of example(s) 21, wherein the point cloud is generated at the onsite device, and wherein the object is identified at an offsite device that is remote from the site.

Example 24 is the method of example(s) 22, further comprising: wirelessly transmitting the point cloud from the onsite device to the offsite device.

Example 25 is the method of example(s) 21, wherein the containing volume is a minimum volume polyhedron that encapsulates one of the set of clusters.

Example 26 is the method of example(s) 21, wherein the laser scanner is a LIDAR sensor.

Example 27 is a system comprising: one or more processors; and one or more non-transitory computer-readable media comprising instructions that, when executed by the one or more processors, cause the one or more processors to perform operations comprising: receiving scan data captured by a laser scanner of an onsite device; receiving global navigation satellite systems (GNSS) data captured by a GNSS receiver of the onsite device; generating a point cloud using the scan data and the GNSS position data, the point cloud including a plurality of points; clustering the point cloud into a set of clusters to form a clustered point cloud; fitting a containing volume to each of the set of clusters to produce a set of containing volumes; and identifying an object from an objects database that corresponds to each of the set of containing volumes to produce object data.

Example 28 is the system of example(s) 27, wherein capturing the GNSS position data using the GNSS receiver includes receiving satellite signals from a plurality of GNSS satellites at an antenna of the GNSS receiver.

Example 29 is the system of example(s) 27, wherein the point cloud is generated at the onsite device, and wherein the object is identified at an offsite device that is remote from the site.

Example 30 is the system of example(s) 29, wherein the point cloud is wirelessly transmitted from the onsite device to the offsite device.

Example 31 is the system of example(s) 27, wherein the containing volume is a minimum volume polyhedron that encapsulates one of the set of clusters.

Example 32 is one or more non-transitory computer-readable media comprising instructions that, when executed by one or more processors, cause the one or more processors to perform operations for identifying objects from a generated point cloud, the operations comprising: receiving scan data captured by a laser scanner of an onsite device; receiving global navigation satellite systems (GNSS) data captured by a GNSS receiver of the onsite device; generating a point cloud using the scan data and the GNSS position data, the point cloud including a plurality of points; clustering the point cloud into a set of clusters to form a clustered point cloud; fitting a containing volume to each of the set of clusters to produce a set of containing volumes; and identifying an object from an objects database that corresponds to each of the set of containing volumes to produce object data.

Example 33 is the one or more non-transitory computer-readable media of example(s) 32, wherein capturing the GNSS position data using the GNSS receiver includes receiving satellite signals from a plurality of GNSS satellites at an antenna of the GNSS receiver.

Example 34 is the one or more non-transitory computer-readable media of example(s) 32, wherein the point cloud is generated at the onsite device, and wherein the object is identified at an offsite device that is remote from the site.

Example 35 is the one or more non-transitory computer-readable media of example(s) 34, further comprising: wirelessly transmitting the point cloud from the onsite device to the offsite device.

Example 36 is the one or more non-transitory computer-readable media of example(s) 32, wherein the containing volume is a minimum volume polyhedron that encapsulates one of the set of clusters.

### BRIEF DESCRIPTION OF THE DRAWINGS

The accompanying drawings, which are included to provide a further understanding of the invention, are incorporated in and constitute a part of this specification, illustrate embodiments of the invention and together with the detailed description serve to explain the principles of the invention. No attempt is made to show structural details of the invention in more detail than may be necessary for a fundamental understanding of the invention and various ways in which it may be practiced.
FIG. 1 illustrates a point cloud generation system comprising an onsite device.
FIG. 2 illustrates a point cloud generation system comprising an onsite device and an offsite device.
FIG. 3 illustrates an example accumulated point cloud.
FIG. 4 illustrates an example set of containing volumes.
FIG. 5 illustrates an example scheme for training a segmentation network.
FIG. 6 illustrates an example synthetic point cloud that may be used to train a segmentation network.
FIG. 7 illustrates a method of generating point clouds of a site.
FIG. 8 illustrates a method of identifying objects at a site from one or more generated point clouds.
FIG. 9 illustrates an example computer system comprising various hardware elements.

### DETAILED DESCRIPTION

The functionalities of a laser scanner and a global navigation satellite systems (GNSS) receiver can be combined in such a way to create a georeferenced point cloud of a physical site. The laser scanner (or "three-dimensional (3D) scanner") operates by emitting a laser beam toward a target and then measuring the time it takes for the light to reflect back to the scanner. This time is converted into the distance between the scanner and the target. As the laser scanner rotates, it repeatedly sends out laser beams, capturing thousands to millions of points by measuring distances at various angles. These points are collected to produce a point cloud, which forms a precise 3D representation of the scanned area.

To locate each point captured by the laser scanner in a global context, a GNSS receiver produces precise geographic coordinates (e.g., latitude, longitude, and altitude) of the scanner's position during the scan. The captured GNSS position data is used to georeference the point cloud. This means that each point in the point cloud is assigned geographic coordinates, effectively placing the scanned data within the global coordinate system defined by the GNSS. To ensure that the points captured by the scanner are accurately georeferenced, both devices may synchronize their clocks to a common time so that the time of the scan data matches the time of the GNSS position data. In some cases, the laser scanner and the GNSS receiver can be integrated into a single device, referred to herein as an onsite device, which is operated at the site to be captured.

Each point in the point cloud represents a single position within a 3D space, mathematically defined by a set of three coordinates (x, y, z) relative to a predefined coordinate system. This set of coordinates quantitatively specifies the point's location in terms of its distance along the x (horizontal), y (vertical), and z (depth) axes from a defined origin point (0, 0, 0). The points together represent the external surface of objects or spaces within the site. The aggregation of points, when processed and analyzed, enables the reconstruction, modeling, and analysis of real-world objects at the site for various applications. For example, engineers can visualize the exact conditions of the site in 3D to monitor the project's progress, reducing the likelihood of costly revisions later.

The point cloud can be augmented with additional data attributes to enrich the representation of the objects or physical environment. For example, each point can be associated with color information, typically represented in the RGB (red, green, blue) color model. In this augmented scenario, each point in the 3D point cloud not only defines the spatial coordinates (x, y, z) but also carries a set of three additional values corresponding to the intensity of red, green, and blue light components. During visualization, this RGB data allows for the coloration of each point and thus the generation of a more lifelike and visually detailed three-dimensional model of the scanned environment or object. Alternatively, color information can be measured as a single intensity value for each point, where the intensity value is indicative of the amount of light reflected by the surface at that point, providing a measure of brightness without color differentiation. In some examples, the onsite device can be equipped with a camera to capture the single-channel or multi-channel images (e.g., grayscale or RGB images) for augmenting the point cloud.

The size of a 3D point cloud generated from scanning environments or objects significantly varies based on the complexity of the site, the density of the points collected, and the additional data attributes (such as RGB or intensity) associated with each point. In some cases, when scanning a single building, the resulting 3D point cloud can range from several gigabytes to tens of gigabytes in size. This variation is due to factors such as the level of detail required, the size and complexity of the building, and whether the interior, exterior, or both are being scanned. High-resolution scans capturing intricate architectural details or large structures will naturally produce larger datasets. However, generating a 3D point cloud by scanning an environment while navigating with a mobile scanning vehicle system, especially over extended distances or through complex urban landscapes, can result in point cloud datasets that are significantly larger, potentially accumulating terabytes or up to hundreds of terabytes in size. The vast size of these datasets is attributed to the extensive area covered, the continuous collection of data over time, and the high density of points needed to accurately represent the dynamic and detailed nature of urban environments.

The management of such large datasets can pose significant challenges in terms of storage, processing, and analysis. Some embodiments described herein relate to an acquisition-time segmentation and filtering of partial point clouds followed by transmission to an offsite device for further processing. A segmentation machine learning model running on the onsite device can process a stream of incoming data points to assign a class label (e.g., ground, tree, building, noise) to each point. Points assigned to one or more particular classes, such as a noise class, can be removed and remaining points can be wirelessly transmitted offsite. By performing these steps at the onsite device, the memory, processing, and communication bandwidths can be freed up, allowing for quicker point cloud accumulation.

Once the complete point cloud has been accumulated at the offsite device, a clustering module divides the point cloud into a set of clusters, a containing volume is fitted to each cluster, and an object identification task identifies an object that corresponds to the containing volume based on the size, shape, position, and orientation of the containing volume. The clustering task groups data points into clusters based on spatial proximity and geometric similarity, thereby isolating distinct objects within the scan. For each reduced cluster, the containing volume may be a minimum volume cube that precisely encapsulates the cluster, serving as the smallest cube that completely contains the grouped points. Each containing volume may be compared to a database of objects to identify a matching object. The database may further include information regarding each object's expected position and orientation, and optionally color and texture information.

In the following description, various examples will be described. For purposes of explanation, specific configurations and details are set forth in order to provide a thorough understanding of the examples. However, it will also be apparent to one skilled in the art that the example may be practiced without the specific details. Furthermore, well-known features may be omitted or simplified in order not to obscure the embodiments being described.

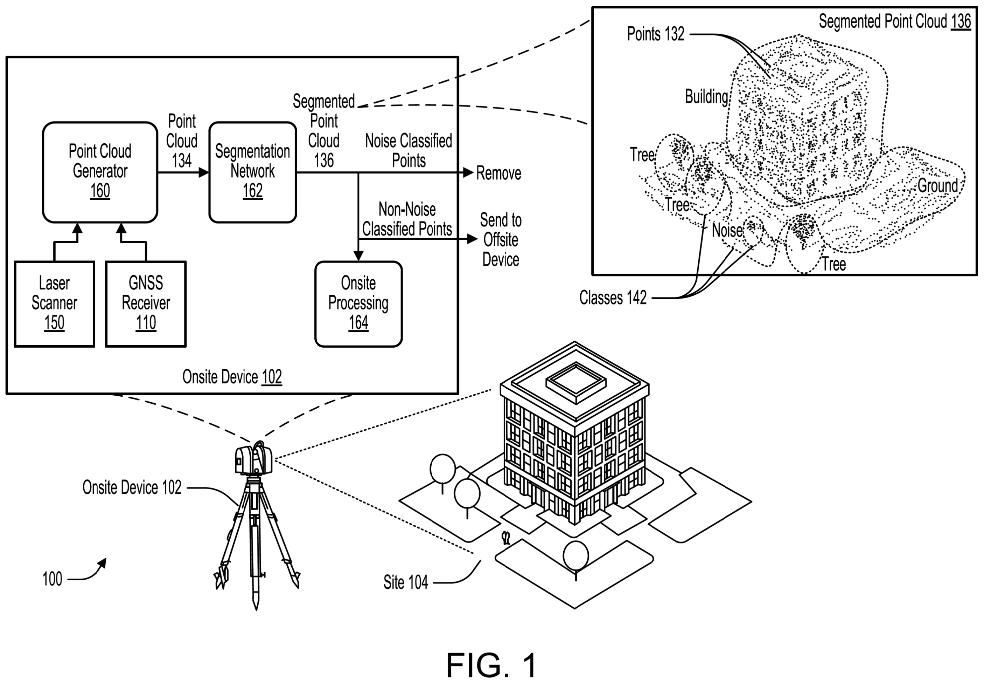

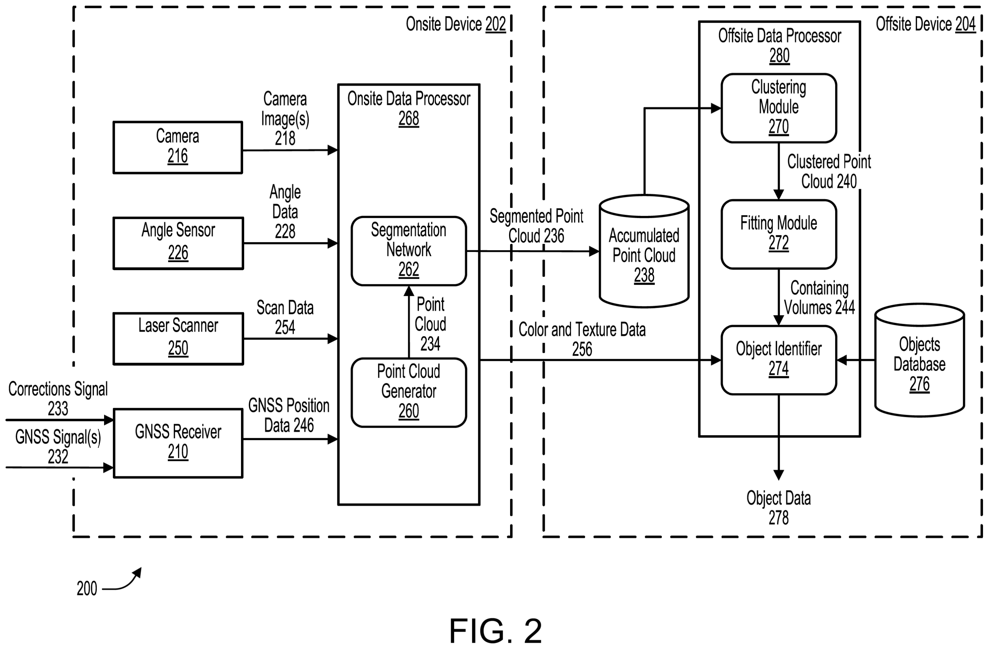

The figures herein follow a numbering convention in which the first digit or digits correspond to the figure number and the remaining digits identify an element or component in the figure. Similar elements or components between different figures may be identified by the use of similar digits. For example, 108 may reference element "08" in FIG. 1, and a similar element may be referenced as 208 in FIG. 2. As will be appreciated, elements shown in the various embodiments herein can be added, exchanged, and eliminated so as to provide a number of additional embodiments of the present disclosure. In addition, the proportion and the relative scale of the elements provided in the figures are intended to illustrate certain embodiments of the present disclosure and should not be taken in a limiting sense.

**FIG. 1** illustrates a point cloud generation system 100 comprising an onsite device 102, in accordance with some embodiments of the present disclosure. Onsite device 102 may be deployed at or within a site 104 such as a construction site, a building site, an environmental site, among other possibilities. Onsite device 102 may include a laser scanner 150 (or "3D scanner") and a GNSS receiver 110 fixed atop a tripod or other support structure. Laser scanner 150 may include a laser source that emits a laser beam directed towards the area being scanned, a mirror system for directing and focusing the laser beam across the site, and a detector for capturing the light that is reflected back from the target surfaces after being struck by the laser beams. The time it takes for the light to return is used to calculate distances forming a distance or depth map, which may be used to create a raw point cloud of the site.

GNSS receiver 110 uses satellite signals received via an antenna to determine its location. The received signals are processed to determine the precise time these signals were sent. The time delays between the signals being sent by their respective satellites and being received by GNSS receiver 110 are used to determine (e.g., by multiplying by the speed of light) a set of distances corresponding to how far the transmitting satellites are from GNSS receiver 110. For each satellite, the distance effectively places the receiver somewhere on the surface of a sphere centered on that satellite. When distances from at least three satellites are known, the receiver uses the three corresponding spheres to determine its position.

The data produced by laser scanner 150 and a GNSS receiver 110 may be processed by a point cloud generator 160 to produced a point cloud 134. The raw point cloud created by laser scanner 150 provides detailed measurements relative to the position of the scanner but lacks geographical context. By combining this point cloud with the geographic coordinates provided by GNSS receiver 110, each point in the cloud can be accurately placed on the Earth's surface. Each point of a set of points 132 within point cloud 134 may be a 3D georeferenced coordinate that is not only a representation of a physical point in space but is also accurately located according to global geographic coordinates. Both laser scanner 150 and GNSS receiver 110 can produce timestamps to ensure accurate time synchronization and positioning within point cloud 134.

A segmentation network 162 (e.g., comprising a trained machine-learning model) running on onsite device 102 may receive point cloud 134 and segment points 132 from point cloud 134 into a set of classes 142 to produce a segmented point cloud 136. In the illustrated example, classes 142 include a tree class, a building class, a ground class, and a noise class. Onsite device 102 may include a class-based routing system that routes points 132 from segmented point cloud 136 to different destinations based on their assigned class. In the illustrated example, points 132 that are assigned to the noise class are removed/deleted and points 132 that are assigned to any non-noise class (e.g., tree class, building class, or ground class) are wirelessly transmitted to an offsite device to be stored in an accumulated point cloud. Optionally, a portion of the points 132 assigned to non-noise classes may be sent to an onsite processing module 164 for performing certain onsite tasks.

**FIG. 2** illustrates a point cloud generation system 200 comprising an onsite device 202 and an offsite device 204, in accordance with some embodiments of the present disclosure. Onsite device 102 may be deployed at or within a site and offsite device 204 may be remote from the site. For example, offsite device 204 may comprise a server computer located at a different geographic location (e.g., different city, state, or country) than onsite device 202. In the illustrated example, onsite device 202 includes a camera 216, an angle sensor 226, a laser scanner 250, a GNSS receiver 210, and an onsite data processor 268.

Camera 216 may generate one or more camera images 218 of the site. Camera images 218 may include a single image, multiple images, a stream of images (e.g., a video), among other possibilities. In some examples, camera image 218 may comprise a single-channel image such as a grayscale image or a multi-channel image such as an RGB image. Angle sensor 226 may generate angle data 228 indicative of the rotational movement of onsite device 202. Angle sensor 226 may be any electronic device capable of detecting angular rate and/or angular position. In some embodiments, angle sensor 226 may directly detect angular rate and may integrate to obtain angular position, or alternatively angle sensor 226 may directly measure angular position and may determine a change in angular position (e.g., determine the derivative) to obtain angular rate. In some cases, angle sensor 226 is used to determine a yaw angle, a pitch angle, and/or a roll angle corresponding to onsite device 202. Accordingly, in various embodiments angle data 228 may include one or more of a yaw angle, a pitch angle, a roll angle, an orientation, or raw data from which one or more angles and orientations may be calculated. Angle sensor 226 may include one or more gyroscopes and may be included as part of an inertial measurement unit (IMU).

Laser scanner 250 may generate scan data 254 based on the emission and reception of laser beams towards the area being scanned, as described elsewhere herein. Laser scanner 250 may include a time-of-flight (ToF) sensor or a structured light sensor. In one example, laser scanner 250 may be a LIDAR sensor that emits laser pulses in various directions using a rotating mirror or a stationary array of lasers. Scan data 254 generated by laser scanner 250 may include a depth image or a raw point cloud of the site. For example, scan data 254 may include a depth image comprising a 2D array of depth values corresponding to each pixel in the image. A point cloud generator 260 running on onsite data processor 268 may convert the depth image from scan data 254 into a raw point cloud by reconstructing the 3D positions of points in the site from the depth information.

GNSS receiver 210 may receive one or more GNSS signals 232 from one or more GNSS satellites to generate position estimates. In some embodiments, GNSS receiver 210 also receives a corrections signal 233 (using a same or different antenna) to apply corrections to the position estimates, allowing the position estimates to improve from meter accuracy to centimeter accuracy in many cases. Alternatively or additionally, onsite data processor 268 may apply the corrections to the position estimates after receiving GNSS position data 246 from GNSS receiver 210. GNSS receiver 210 may include a patch antenna, a helix antenna, a microstrip antenna, a choke ring antenna, an antenna array, among other possibilities.

Onsite data processor 268 may include suitable computing and memory resources for processing various input data and generating various outputs. In some examples, onsite data processor 268 includes a central processing unit (CPU), a graphics processing unit (GPU), a machine learning model processor, among other possibilities. Onsite data processor 268 may include a number of software elements including a point cloud generator 260 and a segmentation network 262 that operate on data received from various sources, including but not limited to, camera images 218 from camera 216, angle data 228 from angle sensor 226, scan data 254 from laser scanner 250, and GNSS position data 246 from GNSS receiver 210.

Point cloud generator 260 may generate a raw point cloud using scan data 254. This raw point cloud may be combined with the geographic coordinates of onsite device 202 provided by GNSS position data 246 and the orientation of onsite device 202 provided by angle data 228 to generate a point cloud 234 including a set of points each containing a 3D georeferenced coordinate. Segmentation network 262 consists of a neural network or other machine-learning model that receives point cloud 234 as input and segments points from point cloud 234 into a set of classes to produce a segmented point cloud 236. Segmentation network 262 may further employ outlier removal algorithms, such as isolation forests, to remove outlier points to exclude erroneous classifications. In some cases, onsite device 202 includes a wireless communication device for transmitting segmented point cloud 236 to offsite device 204, at which points from segmented point cloud 236 may be added to an accumulated point cloud 238.

Offsite device 204 may wait until a particular number of points have been received and stored in accumulated point cloud 238 before beginning to process accumulated point cloud 238 at an offsite data processor 280. Offsite data processor 280 may include suitable computing and memory resources for processing accumulated point cloud 238, including a CPU, a GPU, a neural network processor, among other possibilities. Offsite data processor 280 may include a number of software elements including a clustering module 270, a fitting module 272, and an object identifier 274. Clustering module 270 may employ one of various clustering techniques, such as the k-means or DBSCAN clustering algorithms, to generate a clustered point cloud 240 consisting of the points grouped in a set of clusters based on spatial proximity and geometric similarity.

Fitting module 272 may receive clustered point cloud 240 and may produce a set of containing volumes 244 for the set of clusters in clustered point cloud 240. For each cluster, the containing volume may be a minimum volume cube or box (e.g., a hexahedron or more generally, a polyhedron) that precisely encapsulates the cluster. In some examples, fitting module 272 performs principal component analysis (PCA) to find the principal directions of the points in a cluster, which are the directions in which the data varies the most. These directions define the orientation of the box. Fitting module 272 may compute a centroid as the mean position of all the points in the cluster, which serves as the center of the box. The covariance matrix of the points relative to the centroid may be computed. This matrix captures how point coordinates vary together. Fitting module 272 may decompose the covariance matrix to find its eigenvectors and eigenvalues, the eigenvectors representing the directions of maximum variance and defining the orientation of the axes of the box and the eigenvalues giving a measure of the variance along these axes. For each axis, the minimum and maximum coordinates of the points can be found, defining the extents of the box along each principal axis. The difference between the maximum and minimum values along each axis gives the length, width, and height of the containing volume.

Object identifier 274 may receive containing volumes 244 and identify an object from objects database 276 that corresponds to each containing volume. Object identifier 274 may produce object data 278 that indicates each identified object and the 3D position and orientation of the identified object. In some examples, object identifier 274 may receive color and texture data 256 from onsite data processor 268, which may be generated by onsite data processor 268 based on camera images 218. In some examples, color and texture data 256 may be overlaid onto containing volumes 244 to facilitate object identification. Object identifier 274 may, for example, generate a feature vector for each of the containing volumes 244, overlaid with color and texture data 256, and compare the feature vector to those stored in objects database 276. Feature vectors may be mathematical representations of the overlaid containing volume's key characteristics, such as geometric, textural, or color information. This capability significantly expands the system's utility by enabling it to adaptively recognize and classify a wide variety of components across different scans and environments.

Object data 278 may be visualized by overlaying the identified and classified objects onto the 3D rendering of accumulated point cloud 238. Additionally, detailed reports may be generated to provide comprehensive insights into each identified object, including its classification, dimensions, and other relevant specifications. Such capabilities enable the direct application of the scanned data to decision-making processes. For instance, within the context of construction management, the system could automatically identify suitable replacement items for the objects detected in the scan, thereby enhancing project management and operational efficiency. This system, through its method of transforming raw 3D spatial data into structured and actionable information, offers a significant improvement in efficiency and accuracy for a wide array of applications such as construction management and inventory tracking. In some cases, object data 278 may be used for replacement part identification and inventory management. For example, accumulated point cloud 238 and object data 278 may be collectively displayed for a user to select one or more objects to be replaced. Upon selecting an object, a order to purchase the object(s) may be made from the appropriate manufacture.

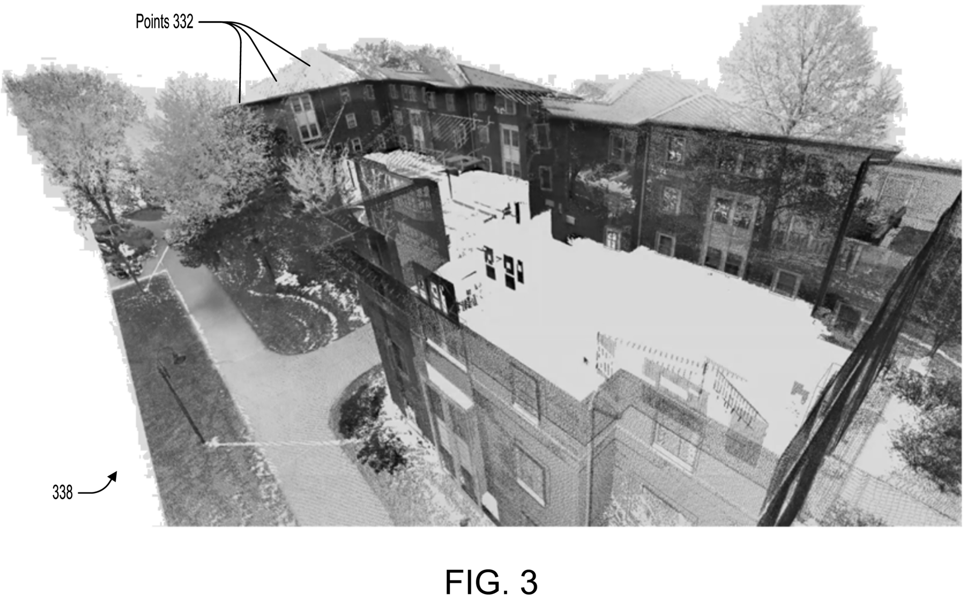

**FIG. 3** illustrates an example accumulated point cloud 338, in accordance with some embodiments of the present disclosure. Accumulated point cloud 338 may be generated at a site having a building, several trees, grass, sidewalks, and other exterior structures such as light posts. For the illustrated example, an onsite device was positioned at several locations surrounding the building. At each of the locations, point clouds were generated and segmented into multiple classes. Points assigned to a noise class were removed prior to wirelessly transmitting the segmented point clouds to an offsite device to form accumulated point cloud 338.

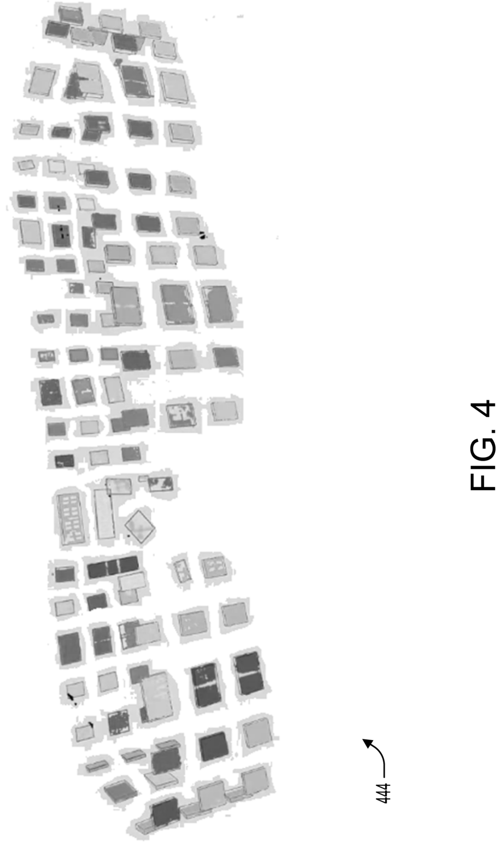

**FIG. 4** illustrates an example set of containing volumes 444, in accordance with some embodiments of the present disclosure. Containing volumes 444 was generated based on accumulated point cloud 338 illustrated in FIG. 3. For example, using a clustering module and a fitting module running on an offsite data processor, 3D points in accumulated point cloud 338 were clustered and the resulting set of clusters were analyzed to produce containing volumes 444. In the illustrated example, containing volumes 444 correspond to different windows of a building being scanned. Using an objects database and an object identifier running on the offsite data processor, an object from the database may be matched to each of containing volumes 444. The offsite data processor may output a summary of the identified objects, such as the different types of windows that were identified and a quantity of each of the different types of windows that were identified. More specific information such as floor-specific types and quantities of identified windows may also be included in the summary.

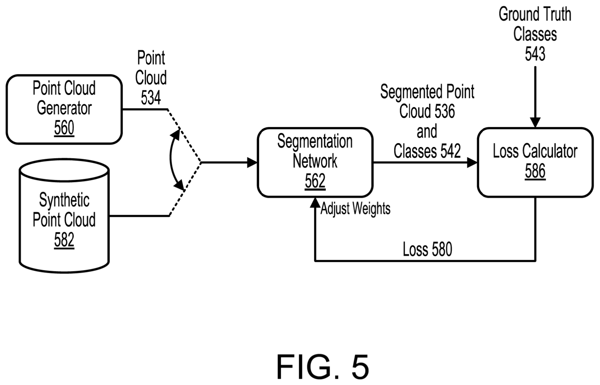

**FIG. 5** illustrates an example scheme for training a segmentation network 562, in accordance with some embodiments of the present disclosure. Segmentation network 562 may be a machine-learning model configured to receive a point cloud 534 or a synthetic point cloud 582 as an input point cloud and assign classes 542 to the points in the input point cloud to form a segmented point cloud 536. In some examples, segmentation network 562 may generate a set of probabilities for each of the points corresponding to different classes to which points may be assigned, the highest probability for each point corresponding to the assigned class. Segmentation network 562 may have a network structure that includes an input layer, several hidden layers, and an output layer. Each of the layers may include a number of neurons that perform weighted summations and implement activation functions, such as ReLU, sigmoid, or tanh that help segmentation network 562 learn non-linear patterns.

A loss calculator may receive classes 542 and compare them to ground truth classes 543 to compute a loss 580. Ground truth classes may be manually prepared by one or more users (e.g., by visual inspection of the input point cloud) or may be automatically generated along with synthetic point cloud 582. Loss calculator 586 may implement cross-entropy loss, which measures the difference between the predicted probabilities and the one-hot encoded ground truth. Loss 580 may be used to adjust the weights of segmentation network 562 using an optimization method like Stochastic Gradient Descent (SGD), Adam, or RMSprop, which can update the weights based on the data and the loss function. Loss 580 may be used to calculate gradients for every weight in segmentation network 562 by backpropagating loss 580 back through segmentation network 562. This step determines how each weight should be adjusted to minimize the error.

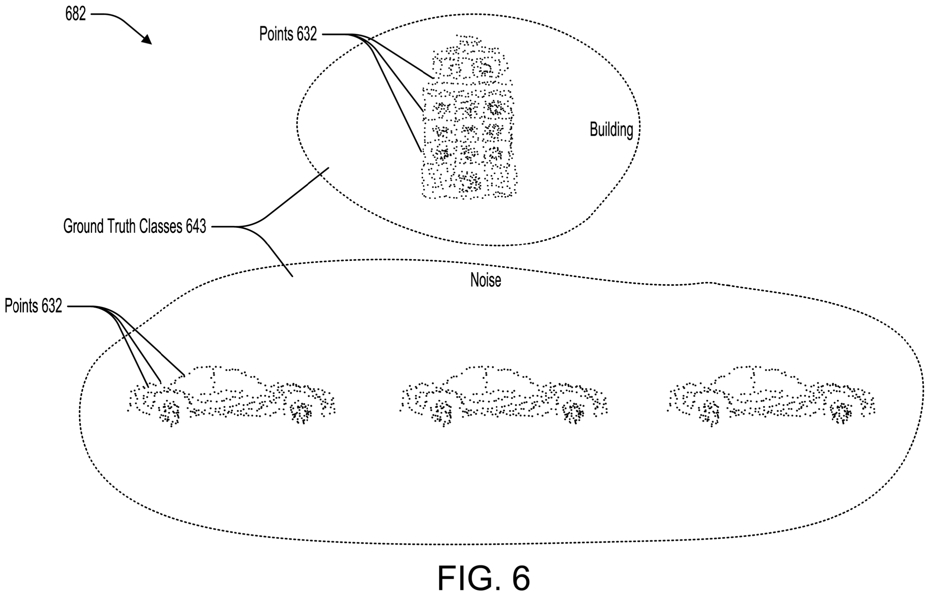

**FIG. 6** illustrates an example synthetic point cloud 682 that may be used to train a segmentation network, in accordance with some embodiments of the present disclosure. Synthetic point cloud 682 may be generated to include points 632 assigned to ground truth classes 643 including a noise class and one or more non-noise classes. In the illustrated example, synthetic point cloud 682 is generated by creating repeating point cloud elements that are spatially offset from each other (e.g., multiple point cloud elements of a car are created and are spaced laterally from each other to imitate the movement of the car between scans) and assigning the noise class to the repeated point cloud elements for the ground truth data. In some cases, synthetic point cloud 682 may be generated by taking a point cloud generated by a laser scanner and a GNSS receiver and copying certain point cloud elements to create repeating point cloud elements that are spatially offset.

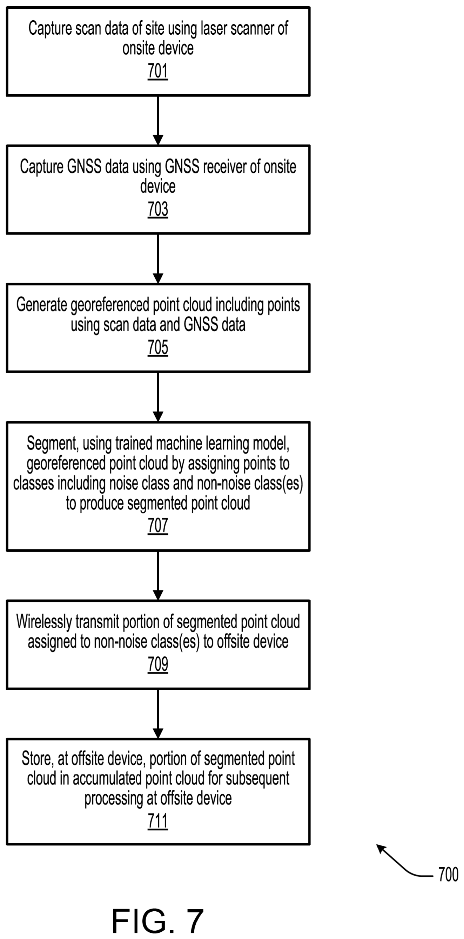

**FIG. 7** illustrates a method 700 of generating point clouds of a site, in accordance with some embodiments of the present disclosure. One or more steps of method 700 may be omitted during performance of method 700, and steps of method 700 may be performed in any order and/or in parallel. One or more steps of method 700 may be performed by one or more processors, such as those included in a data processor. Method 700 may be implemented as a computer-readable medium or computer program product comprising instructions which, when the program is executed by one or more computers, cause the one or more computers to carry out the steps of method 700.

At step 701, a laser scanner (e.g., laser scanners 150, 250) of an onsite device (e.g., onsite devices 102, 202) captures scan data (e.g., scan data 254) of a site (e.g., site 104). The laser scanner may be a LIDAR sensor. The onsite device may include a tripod on which the laser scanner is mounted.

At step 703, a GNSS receiver (e.g., GNSS receivers 110, 210) of the onsite device captures GNSS position data (e.g., GNSS position data 246). The GNSS position data may be captured by the GNSS receiver receiving satellite signals from a plurality of GNSS satellites at an antenna of the GNSS receiver.

At step 705, a georeferenced point cloud (e.g., point clouds 134, 234, 534) is generated using the scan data and the GNSS position data. The georeferenced point cloud may include a plurality of points (e.g., points 132, 332, 632). The georeferenced point cloud may be generated using a point cloud generator (e.g., point cloud generators 160, 260, 560) running on an onsite data processor (e.g., onsite data processor 268) of the onsite device.

At step 707, the georeferenced point cloud is segmented using a trained machine learning model (e.g., segmentation networks 162, 262, 562) by assigning the plurality of points to a set of classes (e.g., classes 142, 542) to produce a segmented point cloud (e.g., segmented point clouds 136, 236, 536). The set of classes may include a noise class and one or more non-noise classes. The one or more non-noise classes may include a building class, a tree class, a ground class, a steps class, a railing class, a sidewalk class, a door class, a window class, a wall class, a sign class, a pole class, among other possibilities. The trained machine learning model may be a convolutional neural network or a transformer, among other possibilities. The trained machine learning model may be at least partially trained using a synthetic point cloud.

At step 709, a portion of the segmented point cloud assigned to the one or more non-noise classes is wirelessly transmitted to an offsite device (e.g., offsite device 204) that is remote from the site. In some examples, a second portion of the segmented point cloud assigned to the noise class may be deleted from a memory of the onsite device to free up the memory for subsequent generated point clouds.

At step 711, the portion of the segmented point cloud is stored in an accumulated point cloud (e.g., accumulated point clouds 238, 338) at the offsite device for subsequent processing at the offsite device. The portion of the segmented point cloud stored in the accumulated point cloud may comprise less than 5%, 10%, 15%, 20%, 25%, 30%, 35%, 40%, 45%, or 50% of the accumulated point cloud when the subsequent processing is performed.

In some examples, additional portions of segmented point clouds may be generated and wirelessly transmitted to the offsite device for storage in the accumulated point cloud. Method 700 may further include capturing second scan data of the site using the laser scanner, capturing second GNSS position data using the GNSS receiver, generating a second georeferenced point cloud using the second scan data and the second GNSS position data, segmenting, using the trained machine learning model, the second georeferenced point cloud to produce a second segmented point cloud, wirelessly transmitting a portion of the second segmented point cloud assigned to the one or more non-noise classes to the offsite device, and storing the portion of the second segmented point cloud in the accumulated point cloud for the subsequent processing.

In some examples, method 700 may further include steps for training the machine learning model. During each training iteration, the machine learning model may receive an input point cloud and assign classes to the points in the input point cloud to form a segmented point cloud. The machine learning model may generate a set of probabilities for each of the points corresponding to different classes to which points may be assigned. A loss calculator (e.g., loss calculator 586) may receive the set of probabilities for each of the points and compare the probabilities to ground truth classes (e.g., ground truth classes 543, 643) to compute a loss (e.g., loss 580). The ground truth classes may be part of a manually labeled dataset prepared by human annotators. The computed loss may be used to adjust the weights of the machine learning model.

To further augment the training data and introduce a broader range of scenarios, synthetic data generated from 3D engines can be utilized. These engines can create highly realistic virtual environments populated with detailed models of objects, landscapes, and various conditions (e.g., different lighting and weather conditions). Each object and feature within these virtual environments can be automatically labeled with perfect accuracy, providing a source of training data that includes a wide variety of situations and object interactions. This synthetic approach is particularly valuable for representing rare scenarios that are difficult to capture in real-world data, as well as for generating large volumes of data with specific conditions or objects of interest. In some examples, synthetic data (or real data) may be augmented by applying jitter to RGB values, XYZ values, or applying random rotations to the 3D point cloud.

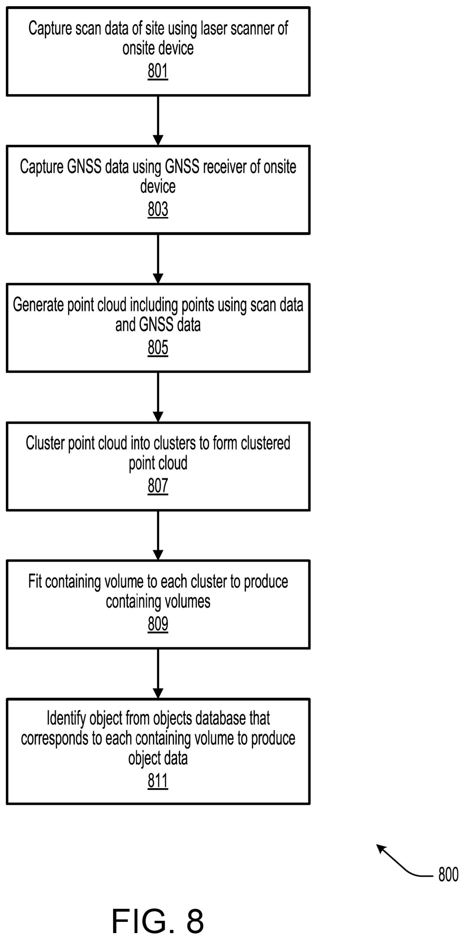

**FIG. 8** illustrates a method 800 of identifying objects at a site from one or more generated point clouds, in accordance with some embodiments of the present disclosure. One or more steps of method 800 may be omitted during performance of method 800, and steps of method 800 may be performed in any order and/or in parallel. One or more steps of method 800 may be performed by one or more processors, such as those included in a data processor. Method 800 may be implemented as a computer-readable medium or computer program product comprising instructions which, when the program is executed by one or more computers, cause the one or more computers to carry out the steps of method 800.

At step 801, a laser scanner (e.g., laser scanners 150, 250) of an onsite device (e.g., onsite devices 102, 202) captures scan data (e.g., scan data 254) of a site (e.g., site 104). The laser scanner may be a LIDAR sensor. The onsite device may include a tripod on which the laser scanner is mounted.

At step 803, a GNSS receiver (e.g., GNSS receivers 110, 210) of the onsite device captures GNSS position data (e.g., GNSS position data 246). The GNSS position data may be captured by the GNSS receiver receiving satellite signals from a plurality of GNSS satellites at an antenna of the GNSS receiver.

At step 805, a point cloud (e.g., point clouds 134, 234, 238, 338, 534) is generated using the scan data and the GNSS position data. The point cloud may include a plurality of points (e.g., points 132, 332, 632). The point cloud may be generated using a point cloud generator (e.g., point cloud generators 160, 260, 560) running on an onsite data processor (e.g., onsite data processor 268) of the onsite device.

At step 807, the point cloud is clustered into a set of clusters to form a clustered point cloud (e.g., clustered point cloud 240).

At step 809, a containing volume is fitted to each of the set of clusters to produce a set of containing volumes (e.g., containing volumes 244, 444).

At step 811, an object from an objects database (e.g., objects database 276) that corresponds to each of the set of containing volumes is identified to produce object data (e.g., object data 278).

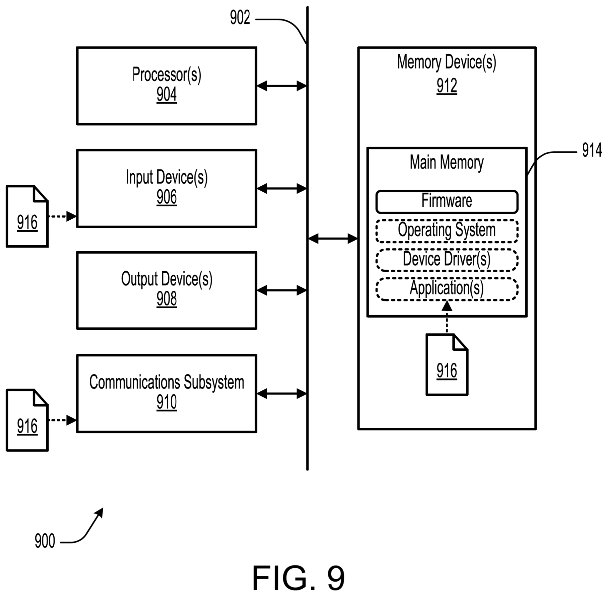

**FIG. 9** illustrates an example computer system 900 comprising various hardware elements, in accordance with some embodiments of the present disclosure. Computer system 900 may be incorporated into or integrated with devices described herein and/or may be configured to perform some or all of the steps of the methods provided by various embodiments. It should be noted that FIG. 9 is meant only to provide a generalized illustration of various components, any or all of which may be utilized as appropriate. FIG. 9, therefore, broadly illustrates how individual system elements may be implemented in a relatively separated or relatively more integrated manner.

In the illustrated example, computer system 900 includes a communication medium 902, one or more processor(s) 904, one or more input device(s) 906, one or more output device(s) 908, a communications subsystem 910, and one or more memory device(s) 912. Computer system 900 may be implemented using various hardware implementations and embedded system technologies. For example, one or more elements of computer system 900 may be implemented within an integrated circuit (IC), an application-specific integrated circuit (ASIC), an application-specific standard product (ASSP), a field-programmable gate array (FPGA), such as those commercially available by XILINX^{®}, INTEL^{®}, or LATTICE SEMICONDUCTOR^{®}, a system-on-a-chip (SoC), a microcontroller, a printed circuit board (PCB), and/or a hybrid device, such as an SoC FPGA, among other possibilities.

The various hardware elements of computer system 900 may be communicatively coupled via communication medium 902. While communication medium 902 is illustrated as a single connection for purposes of clarity, it should be understood that communication medium 902 may include various numbers and types of communication media for transferring data between hardware elements. For example, communication medium 902 may include one or more wires (e.g., conductive traces, paths, or leads on a PCB or integrated circuit (IC), microstrips, striplines, coaxial cables), one or more optical waveguides (e.g., optical fibers, strip waveguides), and/or one or more wireless connections or links (e.g., infrared wireless communication, radio communication, microwave wireless communication), among other possibilities.

In some embodiments, communication medium 902 may include one or more buses that connect the pins of the hardware elements of computer system 900. For example, communication medium 902 may include a bus that connects processor(s) 904 with main memory 914, referred to as a system bus, and a bus that connects main memory 914 with input device(s) 906 or output device(s) 908, referred to as an expansion bus. The system bus may itself consist of several buses, including an address bus, a data bus, and a control bus. The address bus may carry a memory address from processor(s) 904 to the address bus circuitry associated with main memory 914 in order for the data bus to access and carry the data contained at the memory address back to processor(s) 904. The control bus may carry commands from processor(s) 904 and return status signals from main memory 914. Each bus may include multiple wires for carrying multiple bits of information and each bus may support serial or parallel transmission of data.

Processor(s) 904 may include one or more central processing units (CPUs), graphics processing units (GPUs), neural network processors or accelerators, digital signal processors (DSPs), and/or other general-purpose or special-purpose processors capable of executing instructions. A CPU may take the form of a microprocessor, which may be fabricated on a single IC chip of metal-oxide-semiconductor field-effect transistor (MOSFET) construction. Processor(s) 904 may include one or more multi-core processors, in which each core may read and execute program instructions concurrently with the other cores, increasing speed for programs that support multithreading.

Input device(s) 906 may include one or more of various user input devices such as a mouse, a keyboard, a microphone, as well as various sensor input devices, such as an image capture device, a temperature sensor (e.g., thermometer, thermocouple, thermistor), a pressure sensor (e.g., barometer, tactile sensor), a movement sensor (e.g., accelerometer, gyroscope, tilt sensor), a light sensor (e.g., photodiode, photodetector, charge-coupled device), and/or the like. Input device(s) 906 may also include devices for reading and/or receiving removable storage devices or other removable media. Such removable media may include optical discs (e.g., Blu-ray discs, DVDs, CDs), memory cards (e.g., CompactFlash card, Secure Digital (SD) card, Memory Stick), floppy disks, Universal Serial Bus (USB) flash drives, external hard disk drives (HDDs) or solid-state drives (SSDs), and/or the like.

Output device(s) 908 may include one or more of various devices that convert information into human-readable form, such as without limitation a display device, a speaker, a printer, a haptic or tactile device, and/or the like. Output device(s) 908 may also include devices for writing to removable storage devices or other removable media, such as those described in reference to input device(s) 906. Output device(s) 908 may also include various actuators for causing physical movement of one or more components. Such actuators may be hydraulic, pneumatic, electric, and may be controlled using control signals generated by computer system 900.

Communications subsystem 910 may include hardware components for connecting computer system 900 to systems or devices that are located external to computer system 900, such as over a computer network. In various embodiments, communications subsystem 910 may include a wired communication device coupled to one or more input/output ports (e.g., a universal asynchronous receiver-transmitter (UART)), an optical communication device (e.g., an optical modem), an infrared communication device, a radio communication device (e.g., a wireless network interface controller, a BLUETOOTH^{®} device, an IEEE 802.11 device, a Wi-Fi device, a Wi-Max device, a cellular device), among other possibilities.

Memory device(s) 912 may include the various data storage devices of computer system 900. For example, memory device(s) 912 may include various types of computer memory with various response times and capacities, from faster response times and lower capacity memory, such as processor registers and caches (e.g., L0, L1, L2), to medium response time and medium capacity memory, such as random-access memory (RAM), to lower response times and lower capacity memory, such as solid-state drives and hard drive disks. While processor(s) 904 and memory device(s) 912 are illustrated as being separate elements, it should be understood that processor(s) 904 may include varying levels of on-processor memory, such as processor registers and caches that may be utilized by a single processor or shared between multiple processors.

Memory device(s) 912 may include main memory 914, which may be directly accessible by processor(s) 904 via the address and data buses of communication medium 902. For example, processor(s) 904 may continuously read and execute instructions stored in main memory 914. As such, various software elements may be loaded into main memory 914 to be read and executed by processor(s) 904 as illustrated in FIG. 9. Typically, main memory 914 is volatile memory, which loses all data when power is turned off and accordingly needs power to preserve stored data. Main memory 914 may further include a small portion of non-volatile memory containing software (e.g., firmware, such as BIOS) that is used for reading other software stored in memory device(s) 912 into main memory 914. In some embodiments, the volatile memory of main memory 914 is implemented as RAM, such as dynamic random-access memory (DRAM), and the non-volatile memory of main memory 914 is implemented as read-only memory (ROM), such as flash memory, erasable programmable read-only memory (EPROM), or electrically erasable programmable read-only memory (EEPROM).

Computer system 900 may include software elements, shown as being currently located within main memory 914, which may include an operating system, device driver(s), firmware, compilers, and/or other code, such as one or more application programs, which may include computer programs provided by various embodiments of the present disclosure. Merely by way of example, one or more steps described with respect to any methods discussed above, may be implemented as instructions 916, which are executable by computer system 900. In one example, such instructions 916 may be received by computer system 900 using communications subsystem 910 (e.g., via a wireless or wired signal that carries instructions 916), carried by communication medium 902 to memory device(s) 912, stored within memory device(s) 912, read into main memory 914, and executed by processor(s) 904 to perform one or more steps of the described methods. In another example, instructions 916 may be received by computer system 900 using input device(s) 906 (e.g., via a reader for removable media), carried by communication medium 902 to memory device(s) 912, stored within memory device(s) 912, read into main memory 914, and executed by processor(s) 904 to perform one or more steps of the described methods.

In some embodiments of the present disclosure, instructions 916 are stored on a computer-readable storage medium (or simply computer-readable medium). Such a computer-readable medium may be non-transitory and may therefore be referred to as a non-transitory computer-readable medium. In some cases, the non-transitory computer-readable medium may be incorporated within computer system 900. For example, the non-transitory computer-readable medium may be one of memory device(s) 912 (as shown in FIG. 9). In some cases, the non-transitory computer-readable medium may be separate from computer system 900. In one example, the non-transitory computer-readable medium may be a removable medium provided to input device(s) 906 (as shown in FIG. 9), such as those described in reference to input device(s) 906, with instructions 916 being read into computer system 900 by input device(s) 906. In another example, the non-transitory computer-readable medium may be a component of a remote electronic device, such as a mobile phone, that may wirelessly transmit a data signal that carries instructions 916 to computer system 900 and that is received by communications subsystem 910 (as shown in FIG. 9).

Instructions 916 may take any suitable form to be read and/or executed by computer system 900. For example, instructions 916 may be source code (written in a human-readable programming language such as Java, C, C++, C#, Python), object code, assembly language, machine code, microcode, executable code, and/or the like. In one example, instructions 916 are provided to computer system 900 in the form of source code, and a compiler is used to translate instructions 916 from source code to machine code, which may then be read into main memory 914 for execution by processor(s) 904. As another example, instructions 916 are provided to computer system 900 in the form of an executable file with machine code that may immediately be read into main memory 914 for execution by processor(s) 904. In various examples, instructions 916 may be provided to computer system 900 in encrypted or unencrypted form, compressed or uncompressed form, as an installation package or an initialization for a broader software deployment, among other possibilities.

In one aspect of the present disclosure, a system (e.g., computer system 900) is provided to perform methods in accordance with various embodiments of the present disclosure. For example, some embodiments may include a system comprising one or more processors (e.g., processor(s) 904) that are communicatively coupled to a non-transitory computer-readable medium (e.g., memory device(s) 912 or main memory 914). The non-transitory computer-readable medium may have instructions (e.g., instructions 916) stored therein that, when executed by the one or more processors, cause the one or more processors to perform the methods described in the various embodiments.

In another aspect of the present disclosure, a computer-program product that includes instructions (e.g., instructions 916) is provided to perform methods in accordance with various embodiments of the present disclosure. The computer-program product may be tangibly embodied in a non-transitory computer-readable medium (e.g., memory device(s) 912 or main memory 914). The instructions may be configured to cause one or more processors (e.g., processor(s) 904) to perform the methods described in the various embodiments.

In another aspect of the present disclosure, a non-transitory computer-readable medium (e.g., memory device(s) 912 or main memory 914) is provided. The non-transitory computer-readable medium may have instructions (e.g., instructions 916) stored therein that, when executed by one or more processors (e.g., processor(s) 904), cause the one or more processors to perform the methods described in the various embodiments.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes reference to one or more of such users, and reference to "a processor" includes reference to one or more processors and equivalents thereof known to those skilled in the art, and so forth.

Also, the words "comprise," "comprising," "contains," "containing," "include," "including," and "includes," when used in this specification and in the following claims, are intended to specify the presence of stated features, integers, components, or steps, but they do not preclude the presence or addition of one or more other features, integers, components, steps, acts, or groups.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method of generating point clouds of a site, the method comprising:
capturing scan data of the site using a laser scanner of an onsite device;
capturing global navigation satellite systems (GNSS) data using a GNSS receiver of the onsite device;
generating a georeferenced point cloud using the scan data and the GNSS position data, the georeferenced point cloud including a plurality of points;
segmenting, using a trained machine learning model, the georeferenced point cloud by assigning the plurality of points to a set of classes including a noise class and one or more non-noise classes to produce a segmented point cloud;
wirelessly transmitting a portion of the segmented point cloud assigned to the one or more non-noise classes to an offsite device that is remote from the site; and
storing, at the offsite device, the portion of the segmented point cloud in an accumulated point cloud for subsequent processing at the offsite device.

2. The method of claim 1, further comprising:
capturing second scan data of the site using the laser scanner;
capturing second GNSS position data using the GNSS receiver;
generating a second georeferenced point cloud using the second scan data and the second GNSS position data;
segmenting, using the trained machine learning model, the second georeferenced point cloud to produce a second segmented point cloud;
wirelessly transmitting a portion of the second segmented point cloud assigned to the one or more non-noise classes to the offsite device; and
storing the portion of the second segmented point cloud in the accumulated point cloud for the subsequent processing.

3. The method of claim 2, further comprising:
after storing the portion of the segmented point cloud and the portion of the second segmented point cloud, processing the accumulated point cloud at the offsite device by:
clustering the accumulated point cloud into a set of clusters to form a clustered point cloud;
fitting a containing volume to each of the set of clusters to produce a set of containing volumes; and
identifying an object from an objects database that corresponds to each of the set of containing volumes to produce object data.

4. The method of any one of the preceding claims, wherein the portion of the segmented point cloud stored in the accumulated point cloud comprises less than 10% of the accumulated point cloud when the subsequent processing is performed.

5. The method of any one of the preceding claims, wherein the trained machine learning model is a convolutional neural network or a transformer.

6. The method of any one of the preceding claims, wherein the trained machine learning model is at least partially trained using a synthetic point cloud.

7. The method of any one of the preceding claims, wherein the one or more non-noise classes include a building class, a tree class, or a ground class.

8. The method of any one of the preceding claims, wherein a second portion of the segmented point cloud assigned to the noise class is deleted at the onsite device.

9. An apparatus for generating point clouds of a site, the apparatus comprising:
a laser scanner configured to capture scan data of the site;
a global navigation satellite systems (GNSS) receiver configured to capture GNSS position data; and
a data processor configured to:
receive the scan data and the GNSS position data;
generate a georeferenced point cloud using the scan data and the GNSS position data, the georeferenced point cloud including a plurality of points;
segment, using a trained machine learning model, the georeferenced point cloud by assigning the plurality of points to a set of classes including a noise class and one or more non-noise classes to produce a segmented point cloud; and
wirelessly transmit a portion of the segmented point cloud assigned to the one or more non-noise classes to an offsite device that is remote from the site, wherein the portion of the segmented point cloud is stored at the offsite device in an accumulated point cloud for the subsequent processing at the offsite device.

10. The apparatus of claim 9, wherein the data processor is further configured to:
receive second scan data and second GNSS position data;
generate a second georeferenced point cloud using the second scan data and the second GNSS position data;
segment, using the trained machine learning model, the second georeferenced point cloud to produce a second segmented point cloud; and
wirelessly transmit a portion of the second segmented point cloud assigned to the one or more non-noise classes to the offsite device, wherein the portion of the second segmented point cloud is stored at the offsite device in the accumulated point cloud for the subsequent processing.

11. The apparatus of claim 10, wherein the portion of the segmented point cloud stored in the accumulated point cloud comprises less than 10% of the accumulated point cloud when the subsequent processing is performed.

12. The apparatus of any one of claims 9-11, wherein the trained machine learning model is a convolutional neural network or a transformer.

13. The apparatus of any one of claims 9-12, wherein the trained machine learning model is at least partially trained using a synthetic point cloud.

14. The apparatus of any one of claims 9-13, wherein the one or more non-noise classes include a building class, a tree class, or a ground class.

15. A non-transitory computer-readable medium comprising instructions that, when executed by one or more processors, cause the one or more processors to perform operations for generating point clouds of a site, the operations comprising:
receiving scan data captured by a laser scanner of an onsite device;
receiving global navigation satellite systems (GNSS) data captured by a GNSS receiver of the onsite device;
generating a georeferenced point cloud using the scan data and the GNSS position data, the georeferenced point cloud including a plurality of points;
segmenting, using a trained machine learning model, the georeferenced point cloud by assigning the plurality of points to a set of classes including a noise class and one or more non-noise classes to produce a segmented point cloud; and
wirelessly transmitting a portion of the segmented point cloud assigned to the one or more non-noise classes to an offsite device that is remote from the site, wherein the portion of the segmented point cloud is stored at the offsite device in an accumulated point cloud for the subsequent processing at the offsite device.
